# EUROPEAN PATENT SPECIFICATION

(11) **EP 2 817 769 B1**
(45) Date of publication and mention of the grant of the patent: **24.06.2020**
(21) Application number: 13704801.3
(22) Date of filing: 19.02.2013
(51) Int. Cl.: G06Q 10/08

(54) **SYSTEM AND METHOD OF CERTIFICATION, PARTICULARLY FOR THE CERTIFICATION OF VEHICLES, MOTOR VEHICLES AND MOTORCYCLE-LIKE VEHICLES, MODERN AND OF HISTORICAL INTEREST**
ZERTIFIZIERUNGSSYSTEM UND -VERFAHREN, INSBESONDERE ZUR ZERTIFIZIERUNG VON MODERNEN UND HISTORISCHEN FAHRZEUGEN, KRAFTFAHRZEUGEN UND MOTORRADARTIGEN-FAHRZEUGEN
SYSTÈME ET PROCÉDÉ DE CERTIFICATION, EN PARTICULIER POUR LA CERTIFICATION DE VÉHICULES, DE VÉHICULES À MOTEUR ET DE VÉHICULES DE TYPE MOTOCYCLE, MODERNES OU D'UN INTÉRÊT HISTORIQUE

(30) Priority: 20.02.2012 IT MI20120246
(43) Date of publication of application: 31.12.2014
(73) Proprietor: Fabiani, Laura, 21100 Varese (IT)
(72) Inventor: Fabiani, Laura, 21100 Varese (IT)
(74) Representative: Modiano, Micaela Nadia
(86) International application number: PCT/EP2013/053293
(87) International publication number: WO 2013/124276

(56) References cited:
- US-A- 6 121 880
- US-A1- 2011 137 706

## Description

The present invention relates to a system and to a method of certification, for all vehicles, particularly for automotive vehicles.

As is known, all vehicles, motor vehicles and motorcycle-like vehicles, modern and of historical interest, used for racing are subject to periodic checks and inspections. Functional, functional/aesthetic and safety checks focus only on some principal consumable elements of the vehicle, while ignoring elements which directly or indirectly could compromise their functionality and consequently their safety.

Every vehicle is subject to functional depreciation based on use, ageing of the materials, possible accidents and natural events.

The value of every vehicle varies according to the general efficiency, the type of conservation, the history of events and the maintenance carried out by the owner.

The creation of a functional history of the vehicle will contribute to precisely determining the insurance value, the commercial value and the collector's value, and will be an essential foundation for improved safety for the wider community.

Moreover, as is known, vehicles, motor vehicles and motorcycle-like vehicles, once they have reached a certain age and depending on the type of vehicle, can be considered vehicles of historical interest.

In order to listing vehicles of historical interest in adapted registers, such vehicles must be subjected to a thorough assessment by specific personnel in the form of a qualified assessor, who certifies that the vehicle conforms to the original vehicle and thus can be duly listed in the appropriate recognized registers.

Such checks, carefully made by an assessor, can also highlight the fact that some of the components of the vehicle, in addition to not being original, may have partially or completely lost their functionality and thus annotations must be listed in the register.

Such register must be open for inspection by third parties.

Currently, the certification of vehicles is carried out by an engineer assessor of the vehicle registration authority or by an administrator of the recognized historical associations without their being able to attach certified photographic documentation proving the real condition at the time of the check, and moreover without it being possible for the several certifications carried out to be consulted without having to follow crushing bureaucratic procedures. The certifier could attach photographs, supplied by the user or otherwise obtained, taken at another time, on another date, in another place, of another vehicle, thus non certifying the vehicle correctly.
US 2011/137706 discloses a certification system as defined in the preamble of claim 1.
US 6121880 discloses a sticker transponder adapted to be affixed to a glass surface, such as a vehicle windshield, which includes a RFID transponder enabling the storage and retrieval of vehicle related data.

The aim of the present invention is to provide a system and a method of certification, particularly for vehicles, motor vehicles and motorcycle-like vehicles, modern, historic and for sport, which make it possible to ensure a secure certification.

Within this aim, an object of the present invention is to provide a system and a method of certification in which the certification is standardized and thus carried out with methods that can be repeated.

Another object of the present invention is to provide a system and a method of certification that make it possible to create a traceable database of the performance of certifications.

Another object of the present invention is to provide a system and a method of certification that are highly reliable, easily and practically implemented and at low cost.

This aim and these and other objects which will become better apparent hereinafter are all achieved by a certification system for vehicles, motor vehicles, motorcycle-like vehicles and the like, comprising:
- a support containing a unique RFID tag and a unique QR code;
- at least one web server, which is adapted to manage a database which contains data correlated to said RFID tag of said support and to said QR code; said at least one web server being accessible by a plurality of users;
- a computer, handheld device or information technology medium for connection to said at least one web server for the transmission of data;
- video/photographic imaging means, for acquiring images of parts of a vehicle to be certified, said imaging means being adapted to be connected to said computer handheld device or information technology medium;
   said certification system being characterized in that:
   said support is further adapted to be applied to said vehicle; said support being a die-cut sticker which cannot be removed without breaking once applied to the vehicle;
   said video/photographic imaging means being provided with an IP address;
   said computer, handheld device or information technology medium being further adapted to: a) identify the vehicle by way of an authentication key contained in the RFID tag; b) recognize said video/photographic imaging means as being authorized to acquire images of parts of said vehicle by way of reading of said IP address belonging to said video/photographic imaging means; c) receive said images from said video/photographic imaging means and d) following authorization for recognition of said video/photographic imaging means, transmit in real time to said at least one web server said acquired images of parts of said vehicle;
   said at least one web server being further adapted to store in said database said acquired images of said identified vehicle and to associate said acquired images to data related to the geographic position, date and time of recording and transmission of said acquired images, said at least one web server being further adapted to generate a certification report based on the data stored in said database, said report being accessible via said QR code.

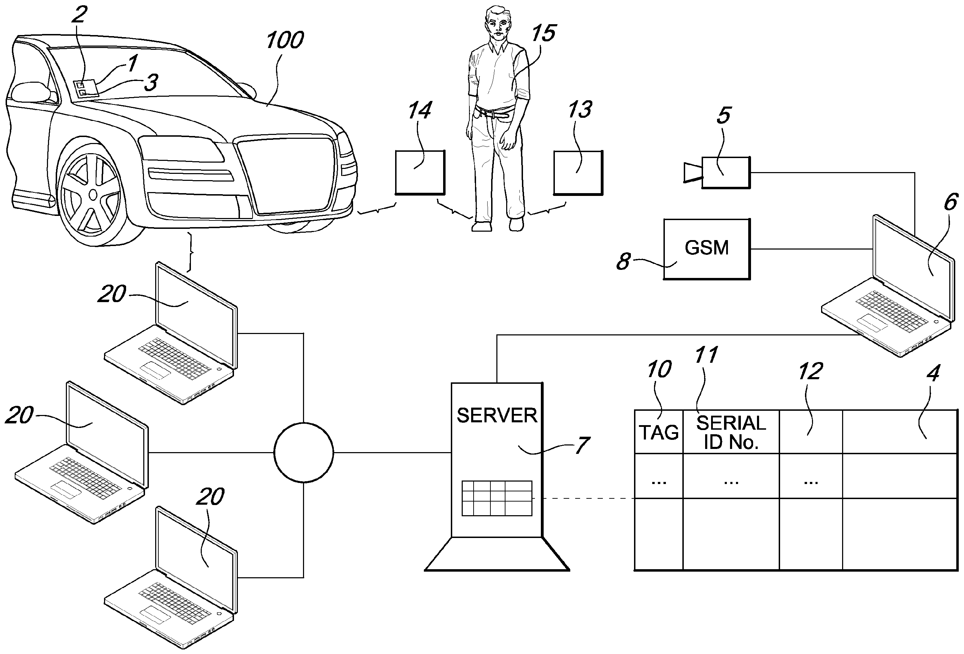

Further characteristics and advantages of the invention will become better apparent from the detailed description of a preferred, but not exclusive, embodiment of the system and of the method according to the present invention, illustrated by way of non-limiting example in the accompanying drawing in which the sole figure schematically illustrates the system according to the present invention.

With reference to the figure, the certification system according to the invention comprises an RFID tag 2 which is inserted in a support. For example, the tag 2 can be inserted by the maker in the core of the windscreen or other structural component, or it can be an adhesive label, commonly known as a "sticker" 1, or a personalized fabric coupon (the production of which is provided with an anti-tear technology). The support inserted by the maker will be matched to the identification numbers of the vehicle. The sticker is applied at the time of certain identification of the vehicle.

The sticker 1 is adapted to be provided so as to make its removal impossible once applied to a motor vehicle or motorcycle-like vehicle, without destroying it (anti-tear). The self-adhesive label or sticker 1 contains the RFID tag 2, and a unique QR code 3.

The label 1 is adhesive and die-cut so that it cannot be removed without breaking. The unique QR code 3, printed on the label, allows access, by way of a handheld device or other information technology medium, provided with a scanner, to public information, and to confidential information stored on at least one server 7. Visibility of the data is allowed to:
- a member of the public who has access to data that is not subject to confidentiality measures,
- control and surveillance bodies, insurance companies, and authorities will have access to the data according to stringent conventions and rules.

The label 1 contains, in its core a unique, passive, serial NFC 2 antenna that enables the identification and electronic authorization for certifications and maintenance as described hereinbelow.

According to necessity, a UV-resistant fabric coupon is provided which depicts a unique and non-replicable QR code. The coupon can be a one-of-a-kind Jacquard loom fabric made for example from Naxis thread, which reproduces the QR code 3, an identification serial number 12 and contains the unique serial RFID chip 2.

The adhesive label 1 or the fabric coupon are subject to the creation of a database 4 on the server 7 or other information technology medium, which contains the data relating to the vehicle that has been certified by an authorized certifier. The sticker and/or the coupon, by way of the codes written in them, make it possible to "point" to the above mentioned database 4, so as to be able to have access to the information. The information can be public, i.e. it can be read simply by reading the QR code 3 of the sticker 1 or of the coupon.

The protected data of the certification can be read by way of an RFID reader 14 which is codified and recognized by the computer, handheld device or any other information technology medium of the certifier and/or by the central server 7, which makes it possible to have access to the confidential information.

The database 4 thus contains the certification data that was read by the certifier 15, who examined the vehicle and photographed or generally imaged the parts of the vehicle which were thus catalogued in the database 4.

To this end, the system according to the invention moreover has means 5 of photographic and/or video imaging, which are provided with their own IP address, and are adapted to be connected to a computer, handheld device 6 or other information technology medium and thus be recognized by the computer or handheld device 6 or other as authorized means 5 for acquisition of photographic images that are thus transmitted in real time to the web server 7.

The photographic and/or video imaging means 5 make it possible to image the different components of the vehicle, motor vehicle or motorcycle-like vehicle, so as to provide images to support the certification and confer trustworthiness and assurance on the judgement made and thus the data from the computer or handheld device 6 or other medium is sent to the database 4 of a central server 7 by way of a connection 8, for example an ADSL, UMTS, 3G, HPSA, 4G network, and a certification report is issued. Each individual check contributes to producing the final report, which is and will always remain available on the database.

The certification data transmitted via the ADSL, UMTS, 3G, HPSA, 4G network makes it possible to attribute the data a uniqueness in terms of the geographic position, date and time of recording and transmission of the certified data item. Using these flows, certain identification is also ensured of the assessor, his/her professional qualifications and his/her physical presence at the place of certification.

The reading of the RFID tag 2, in the sticker 1 or in the coupon makes it possible to point to a tag field 10 in the database 4 which corresponds to the tag read from the sticker 1, which corresponds to a unique ID code 11 which is associated with the data for the vehicle, i.e. the data that must be matched to that tag 2 and to that unique ID 11.

The data on the database 4 is indicated by the reference numeral 12.

The method of certification according to the invention occurs as follows.

The certifier authenticates himself/herself on the computer, or the handheld device 6.

The certifier activates the NFC detector 14 by placing it proximate to the sticker 1 which was previously affixed definitively to the vehicle.

The system proceeds to recognize the vehicle by way of the authentication key contained in the RFID chip 2 of the sticker 1 or of the coupon.

The certifier 15, once the certification procedure has been started, reads, by way of the acquisition means 5, the several parts of the motor vehicle or motorcycle-like vehicle or the like that must be certified, and sends the data to the computer 6 which recognizes the acquisition means 5 as being authorized for the certification, by way of reading the IP addresses of the means 5, and then the data read is sent over the network (for example ADSL, UMTS, 3G, HPSA, 4G) 8 to the server 7. The data is organized in the database 4 by matching the tag 10 to the unique code 11 and placing the tag 10 on the label, sticker 1 or coupon, which must then be applied to the certified motor vehicle.

The certifier 15 formulates his/her assessments, attributing a value to each individual check and adds, if necessary, an alphanumeric comment in the field provided.

An individual check can be composed of three elements:
- photographic imaging
- assessment based on a scale of preset values
- an alphanumeric comment for remarks or reservations.

Access to the server 7 is possible over the web 8 by a plurality of computers or information systems of users 20.

The "non stop" reading in the process generates an extensive audit trail as the acquisition network grows.

Access to the certification data is conducted, besides by customers and previously-authorized members of the public, by authorities and bodies, by insurance companies, assessors and the like. The certified data go to make up a historical archive of the execution of certifications and produce a chronological database of all the assessments of the vehicle or of part of it. This is a useful tool in the event of accidents or disputes and other events in which the vehicle may be involved.

So to sum up, the method associated with the system according to the invention involves the following steps:
- creating the record for the object to be certified in the database 4 of the server 7;
- assigning a unique reference number to the object 12 to be certified in the database of the server;
- issuing an RFID 2 installed on an adhesive support ("sticker") 1 or in a unique numbered coupon of Jacquard loom fabric or other support;
- identification: matching the registration number or chassis number of the vehicle and its serial number 12 and installing RFID 2 (included in the sticker or coupon 1);
- activating the record of the object to be certified on the server 7;
- recognition of assessor: the assessor 15, once the medium 6 is switched on, authenticates himself/herself using a personal RFID tag 13 and password;
- certification: the assessor 15, by way of an RFID reader 14 connected in a protected manner to the support 6, places the reader 14 proximate to the tag 2, which will enable any updating of the record of the object being certified;
- readings: the assessor 15 performs his/her checks according to the approved protocols;
- assessment: the assessor 15 attributes a functional value to the preset and numbered evaluations in the records of the web server;
- photography: the assessor 15, with the imaging means 5, acquires an image for each individual evaluation;
- comment: the assessor 15, in the alphanumeric field corresponding to the check, enters comments, observations, or reservations, alphanumerically;
- assessor's report: once the certification is finished, the system automatically produces a summary assessor's report with the details of each individual check made: evaluation, photo, comment.

This report, and the history of all previous reports, can be viewed on the web server 7 by: the user, the certifying body, the authorities and other authorized parties. The data is accompanied by: information about the certifier, time, date, place where the certification occurred, thanks to the records of the files transmitted by the network 8,

It clearly appears that the system and the method of certification described above can also be applied to areas other than that of the certification of vehicles, motor vehicles and the like.

In particular, the system and the method can be applied to all sectors where a certain certification is desired of components of a complex system and where it is desired that the certification data be visible by control personnel.

In practice it has been found that the system and the method according to the present invention fully achieve the intended aim and objects, in that they make it possible to carry out a secure certification of a vehicle and to make the certification data available to users, both for data that can be seen by all, and for "private" data which can be seen only by way of authentication with an electronic key.

In practice the materials employed, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A certification system, for vehicles, motor vehicles, motorcycle-like vehicles and the like, comprising:
- a support (1) containing a unique RFID tag (2) and a unique QR code (3);
- at least one web server (7), which is adapted to manage a database (4) which contains data (10, 11, 12) correlated to said RFID tag (2) of said support (1) and to said QR code (3); said at least one web server (7) being accessible by a plurality of users;
- a computer, handheld device or information technology medium (6) for connection to said at least one web server (7) for the transmission of data;
- video/photographic imaging means (5), for acquiring images of parts of a vehicle (100) to be certified, said imaging means (5) being adapted to be connected to said computer handheld device or information technology medium (6);
said certification system being **characterized in that**:
said support (1) is further adapted to be applied to said vehicle (100); said support being a die-cut sticker which cannot be removed without breaking once applied to the vehicle (100);
said video/photographic imaging means (5) being provided with an IP address;
said computer, handheld device or information technology medium (6) being further adapted to: a) identify the vehicle (100) by way of an authentication key contained in the RFID tag (2); b) recognize said video/photographic imaging means (5) as being authorized to acquire images of parts of said vehicle (100) by way of reading the IP address belonging to said video/photographic imaging means (5); c) receive said images from said video/photographic imaging means (5) and d) following authorization for recognition of said video/photographic imaging means (5), transmit in real time to said at least one web server (7) said acquired images of parts of said vehicle (100);
said at least one web server (7) being further adapted to store in said database (4) said acquired images of said identified vehicle (100) and to associate said acquired images to data related to the geographic position, date and time of recording and transmission of said acquired images, said at least one web server (7) being further adapted to generate a certification report based on the data stored in said database (4), said report being accessible via said QR code (3).

2. The certification system according to claim 1, **characterized in that** said support (1) comprises an NFC HF passive antenna.

3. The system according to one or more of the preceding claims, **characterized in that** said database (4) comprises a field which contains the tag (10) referring to said support (1) and a field which contains the unique ID code (11) for said support (1).

4. A method for certifying a vehicle, motor vehicle, motorcycle-like vehicle or the like **characterized in that** it comprises the steps of:
- acquiring images of parts of a vehicle (100), said acquiring being performed by way of video/photographic imaging means (5);
- creating a support (1) which is adapted to be applied to said vehicle (100), said support (1) containing an RFID tag, containing an authentication key, and a unique QR code that are adapted to point to a database (4) of at least one web server (7) for access to data; said support (1) being further adapted to be applied to said vehicle (100); ; said video/photographic imaging means (5) being adapted to be recognized as authorized by said computer or handheld device or information technology system (6) by way of reading an IP address which belongs to said imaging means; said support being a die-cut sticker which cannot be removed without breaking once applied to the vehicle (100);
- identifying, by said computer, handheld device or information technology medium (6) the vehicle (100) by way of an authentication key contained in the RFID tag (2) and, following authorization for recognition of said video/photographic imaging means (5),
- transmitting, by said computer, handheld device or information technology medium (6) in real time to said web server (7) said acquired images of parts of said vehicle (100);
- storing, by said at least one web server (7), in said database (4) said acquired images and associating, by said at least one web server (7), said acquired images to data related to the geographic position, date and time of recording and transmission of said acquired images;
- generating, by said at least one web server (7), a certification report based on the data stored in said database (4) said certification report being accessible via said said QR code (3).

5. The method according to claim 4, **characterized in that** said QR code of said sticker is readable by a handheld device or other information technology medium, and said tag of said sticker is readable by recognized RFID reading means.

## Patentansprüche

1. Ein Zertifizierungssystem für Fahrzeuge, Kraftfahrzeuge, motorradartige Fahrzeuge und dergleichen, das Folgendes umfasst:
- einen Träger (1), der ein eindeutiges RFID-Label (2) und einen eindeutigen QR-Code (3) enthält;
- mindestens einen Webserver (7), der ausgebildet ist, um eine Datenbank (4) zu verwalten, die Daten (10, 11, 12) enthält, die mit dem RFID-Label (2) des Trägers (1) und mit dem QR-Code (3) verknüpft sind; wobei auf den mindestens einen Webserver (7) durch eine Vielzahl von Nutzern zugegriffen werden kann;
- einen Computer, ein Handheld oder ein Informationstechnologiemedium (6) zur Verbindung mit dem mindestens einen Webserver (7) für die Übertragung von Daten;
- Video-/Fotografiermittel (5) zur Aufnahme von Bildern von Teilen eines zu zertifizierenden Fahrzeugs (100), wobei die Fotografiermittel (5) ausgebildet sind, um mit dem Computer, dem Handheld oder dem Informationstechnologiemedium (6) verbunden zu werden;
wobei das Zertifizierungssystem **dadurch gekennzeichnet ist, dass**
der Träger (1) weiter ausgebildet ist, um an dem Fahrzeug (100) angebracht zu werden; wobei der Träger ein gestanzter Aufkleber ist, der nicht ohne zu zerreißen entfernt werden kann, sobald er an dem Fahrzeug (100) angebracht wurde;
wobei die Video-/Fotografiermittel (5) mit einer IP-Adresse versehen sind;
wobei der Computer, das Handheld oder das Informationstechnologiemedium (6) weiter ausgebildet sind, um: a) das Fahrzeug (100) über einen Berechtigungsschlüssel zu identifizieren, der im RFID-Label (2) enthalten ist; b) die Video-/Fotografiermittel (5) als autorisiert zu erkennen, Bilder von Teilen des Fahrzeugs (100) aufzunehmen, durch Lesen der IP-Adresse, die zu den Video-/Fotografiermitteln (5) gehört; c) die Bilder von den Video-/Fotografiermitteln (5) zu empfangen und d) nach der Autorisierung zur Erkennung der Video-/Fotografiermittel (5), die aufgenommenen Bilder von Teilen des Fahrzeugs (100) in Echtzeit an den mindestens einen Webserver (7) zu senden;
wobei der mindestens eine Webserver (7) weiter ausgebildet ist, um die aufgenommenen Bilder des identifizierten Fahrzeugs (100) in der Datenbank (4) zu speichern und um die Bilder mit Daten zu assoziieren, die mit der geographischen Position, Datum und Zeit der Aufnahme und der Übertragung der aufgenommenen Bilder verknüpft sind, wobei der mindestens eine Webserver (7) weiter ausgebildet ist, um anhand der in der Datenbank (4) gespeicherten Daten einen Zertifizierungsbericht zu erstellen, wobei über den QR-Code (3) auf den Bericht zugegriffen werden kann.

2. Das Zertifizierungssystem gemäß Anspruch 1, **dadurch gekennzeichnet, dass** der Träger (1) eine passive NFC HF-Antenne umfasst.

3. Das System gemäß einem oder mehreren der obigen Ansprüche, **dadurch gekennzeichnet, dass** die Datenbank (4) ein Feld umfasst, welches das Label (10) enthält, das den Träger (1) bezeichnet, und ein Feld, welches den eindeutigen ID-Code (11) für den Träger (1) enthält.

4. Ein Verfahren zur Zertifizierung eines Fahrzeugs, Kraftfahrzeugs, motorradartigen Fahrzeugs oder dergleichen, **dadurch gekennzeichnet, dass** es folgende Schritte umfasst:
- das Aufnehmen von Bildern von Teilen eines Fahrzeugs (100), wobei das Aufnehmen mit Video-/Fotografiermitteln (5) vorgenommen wird;
- das Herstellen eines Trägers (1), der ausgebildet ist, um an dem Fahrzeug (100) angebracht zu werden, wobei der Träger (1) ein RFID-Label, einen Berechtigungsschlüssel und einen eindeutigen QR-Code enthält, die ausgebildet sind, um für den Zugriff auf Daten auf eine Datenbank (4) mindestens eines Webservers (7) hinzuweisen; wobei der Träger (1) weiter ausgebildet ist, um an dem Fahrzeug (100) angebracht zu werden; wobei die Video-/Fotografiermittel (5) ausgebildet sind, um von dem Computer oder Handheld oder Informationstechnologiemedium (6) als autorisiert erkannt zu werden durch das Lesen einer IP-Adresse, die zu den Video-/Fotografiermitteln gehört; wobei der Träger ein gestanzter Aufkleber ist, der nicht ohne zu zerreißen entfernt werden kann, sobald er an dem Fahrzeug (100) angebracht wurde;
- das Identifizieren, durch den Computer, das Handheld oder Informationstechnologiemedium (6), des Fahrzeugs (100) über einen Berechtigungsschlüssel, der in dem RFID-Label (2) enthalten ist, und, nach der Autorisierung zur Erkennung der Video-/Fotografiermittel (5),
- das Senden, durch den Computer, das Handheld oder Informationstechnologiemedium (6), der aufgenommenen Bilder von Teilen des Fahrzeugs (100) in Echtzeit an den Webserver (7);
- das Speichern, durch den mindestens einen Webserver (7), der aufgenommenen Bilder in der Datenbank (4) und das Assoziieren, durch den mindestens einen Webserver (7), der aufgenommenen Bilder mit Daten, die mit der geographischen Position, Datum und Zeit der Aufnahme und der Übertragung der aufgenommenen Bilder verknüpft sind;
- das Erstellen, durch den mindestens einen Webserver (7), eines Zertifizierungsberichts anhand der in der Datenbank (4) gespeicherten Daten, wobei über den QR-Code (3) auf den Zertifizierungsbericht zugegriffen werden kann.

5. Das Verfahren gemäß Anspruch 4, **dadurch gekennzeichnet, dass** der QR-Code des Aufklebers für ein Handheld oder ein anderes Informationstechnologiemedium lesbar ist und das Label des Aufklebers für anerkannte RFID-Lesemittel lesbar ist.

## Revendications

1. Système de certification, pour des véhicules, des véhicules à moteur, des véhicules analogues à des motocyclettes et analogues, comportant :
- un support (1) contenant une étiquette RFID unique (2) et un code QR unique (3),
- au moins un serveur web (7), qui est adapté pour gérer une base de données (4) qui contient des données (10, 11, 12) corrélées à ladite étiquette RFID (2) dudit support (1) et audit code QR (3), ledit au moins un serveur web (7) étant accessible à une pluralité d'utilisateurs,
- un ordinateur, un dispositif portatif ou un medium des technologies de l'information (6) pour une connexion audit au moins un serveur web (7) en vue de la transmission de données,
- des moyens d'imagerie vidéo/photographique (5), pour acquérir des images de parties d'un véhicule (100) devant être certifié, lesdits moyens d'imagerie (5) étant adaptés pour être connectés audit ordinateur, dispositif portatif ou medium des technologies de l'information (6),
ledit système de certification étant **caractérisé en ce que** :
ledit support (1) est en outre adapté pour être appliqué audit véhicule (100), ledit support étant un autocollant découpé à l'emporte-pièce qui ne peut pas être retiré sans rompre une fois appliqué au véhicule (100),
lesdits moyens d'imagerie vidéo/photographie (5) étant pourvus d'une adresse IP,
ledit ordinateur, dispositif portatif ou medium des technologies de l'information (6) étant en outre adapté pour : a) identifier le véhicule (100) au moyen d'une clé d'authentification contenue dans l'étiquette RFID (2), b) reconnaître lesdits moyens d'imagerie vidéo/photographique (5) comme étant autorisés à acquérir des images de parties dudit véhicule (100) au moyen d'une lecture de l'adresse IP appartenant auxdits moyens d'imagerie vidéo/photographique (5), c) recevoir lesdites images desdits moyens d'imagerie vidéo/photographique (5) et d) après l'autorisation de reconnaissance desdits moyens d'imagerie vidéo/photographique (5), transmettre en temps réel audit au moins un serveur web (7) lesdites images acquises de parties dudit véhicule (100),
ledit au moins un serveur web (7) étant en outre adapté pour stocker dans ladite base de données (4) lesdites images acquises dudit véhicule (100) identifié et pour associer lesdites images acquises à des données liées à la position géographique, à la date et à l'heure d'enregistrement et de transmission desdites images acquises, ledit au moins un serveur web (7) étant en outre adapté pour générer un rapport de certification basé sur les données stockées dans ladite base de données (4), ledit rapport étant accessible via ledit code QR (3).

2. Système de certification selon la revendication 1, **caractérisé en ce que** ledit support (1) comporte une antenne passive NFC HF.

3. Système selon une ou plusieurs des revendications précédentes, **caractérisé en ce que** ladite base de données (4) comporte un champ qui contient l'étiquette (10) se rapportant audit support (1) et un champ qui contient le code ID unique (11) pour ledit support (1).

4. Procédé pour certifier un véhicule, un véhicule à moteur, un véhicule analogue à une motocyclette ou analogue, **caractérisé en ce qu'**il comporte les étapes consistant à :
- acquérir des images de parties d'un véhicule (100), ladite acquisition étant réalisée par des moyens d'imagerie vidéo/photographique (5),
- créer un support (1) qui est adapté pour être appliqué audit véhicule (100), ledit support (1) contenant une étiquette RFID, contenant une clé d'authentification et un code QR unique qui sont adaptés pour pointer vers une base de données (4) d'au moins un serveur web (7) pour accéder à des données, ledit support (1) étant en outre adapté pour être appliqué audit véhicule (100), lesdits moyens d'imagerie vidéo/photographique (5) étant adaptés pour être reconnus comme étant autorisés par ledit ordinateur ou dispositif portatif ou medium des technologies de l'information (6) au moyen d'une lecture d'une adresse IP qui appartient auxdits moyens d'imagerie, ledit support étant un autocollant découpé à l'emporte-pièce qui ne peut pas être retiré sans rompre une fois appliqué au véhicule (100),
- identifier, par ledit ordinateur, dispositif portatif ou medium des technologies de l'information (6), le véhicule (100) au moyen d'une clé d'authentification contenue dans l'étiquette RFID (2) et, après l'autorisation de reconnaissance desdits moyens d'imagerie vidéo/photographique (5),
- transmettre, par ledit ordinateur, dispositif portatif ou medium des technologies de l'information (6) en temps réel audit serveur web (7) lesdites images acquises de parties dudit véhicule (100),
- stocker, par ledit au moins serveur web (7), dans ladite base de données (4) lesdites images acquises et associer, par ledit au moins un serveur web (7), lesdites images acquises à des données liées à la position géographique, à la date et à l'heure d'enregistrement et de transmission desdites images acquises,
- générer, par ledit au moins un serveur web (7), un rapport de certification basé sur les données stockées dans ladite base de données (4), ledit rapport de certification étant accessible via ledit code QR (3).

5. Procédé selon la revendication 4, **caractérisé en ce que** ledit code QR dudit autocollant est lisible par un dispositif portatif ou un autre medium des technologies de l'information, et ladite étiquette dudit autocollant est lisible par des moyens de lecture RFID reconnus.
